**Europäisches Patentamt**

**European Patent Office**

**Office européen des brevets**

(11) Veröffentlichungsnummer: **0 076 923**
**A1**

(12) # EUROPÄISCHE PATENTANMELDUNG

(21) Anmeldenummer: **82108090.0**

(22) Anmeldetag: **02.09.82**

(51) Int. Cl.³: **B 60 P 3/12**

(30) Priorität: **16.09.81 DE 3136700**

(43) Veröffentlichungstag der Anmeldung: **20.04.83**
Patentblatt 83/16

(84) Benannte Vertragsstaaten: **DE FR GB IT**

(71) Anmelder: **Meissner, Albert, Talstrasse 9,
D-6330 Wetzlar 22/OT Naunheim (DE)**

(72) Erfinder: **Meissner, Albert, Talstrasse 9,
D-6330 Wetzlar 22/OT Naunheim (DE)**

(74) Vertreter: **Knefel, Siegfried, Dipl.-Math.,
Wertherstrasse 16 Postfach 1924, D-6330 Wetzlar (DE)**

(54) **Abschleppfahrzeug mit einer kippbaren und ausfahrbaren Ladefläche.**

(57) Abschleppfahrzeug (101) mit einer kippbaren und ausfahrbaren Ladefläche (105), bei der entweder das Kippen, Aus- und Einfahren der Ladefläche mit Hilfe der ohnehin vorgesehenen, für das Beladen des Fahrzeuges vorgesehenen Seilwinde selbsttätig oder durch Verlagerung des Schwerpunktes der Ladefläche erfolgt. Die Ladefläche (105) ist hierzu auf einem um eine hintere Querachse schwenkbaren Kipprahmen (103) verschiebbar gelagert.

EP 0 076 923 A1

## Beschreibung

Die Erfindung betrifft ein Abschleppfahrzeug mit einer kippbaren und ausfahrbaren Ladefläche nach dem Oberbegriff des Anspruches 1. Das Kippen und Ausfahren der Ladefläche wird vorgenommen, um beispielsweise an einem Unfallort das beschädigte Fahrzeug unmittelbar auf die eine schiefe Ebene bildende Ladefläche ziehen zu können. Nach Verblocken des Fahrzeuges wird die Ladefläche abgesenkt, und das beschädigte Fahrzeug kann abtransportiert werden. Zum Kippen und Ausfahren der Ladefläche sind üblicherweise mehrere (drei) hydraulisch betätigte Kolben vorgesehen. Außerdem ist, um das beschädigte Fahrzeug auf die Ladefläche ziehen zu können, ein besonderer Seilzug vorgesehen.

Eine derartige Ausbildung ist aufwendig und teuer.

Aufgabe der Erfindung ist es, ein Abschleppfahrzeug anzugeben, das dasselbe leistet, jedoch mit wesentlich geringerem Aufwand.

Diese Aufgabe wird in einem ersten Ausführungsbeispiel durch das kennzeichnende Merkmal des Anspruches 1 gelöst.

Der ohnehin zum Beladen des Fahrzeuges vorgesehene Seilzug dient bei dieser Ausbildung sowohl zum Anheben als auch zum Aus- und Einfahren der Ladefläche, schließlich aber auch zum Beladen des Fahrzeuges, wie anhand der Zeichnung gezeigt werden soll.

Gemäß einem weiteren Ausführungsbeispiel wird die der Erfindung zugrunde liegende Aufgabe durch das kennzeichnende Merkmal des Anspruches 12 gelöst.

Gemäß diesem Ausführungsbeispiel wird die Ladefläche durch den vorgesehenen Motor nach hinten ausgefahren, und sie schwenkt dann selbsttätig mit ihrem hinteren Teil nach unten, wenn sich ihr Schwerpunkt über die Drehachse des Rahmens hinaus verlagert.

Um hierbei ein hartes Aufsetzen auf dem Boden zu verhindern, ist eine vorzugsweise hydraulisch arbeitende Bremse vorgesehen, beispielsweise in der Art, daß in einem mit Öl gefüllten Zylinder ein mit dem Rahmen verbundener Kolben hin- und herbewegbar ist, der beim Kippen der Ladefläche das vor dem Kolben angeordnete Öl über eine Leitung, die vorzugsweise mit einer Drossel versehen ist, in den hinter dem Kolben liegenden Raum strömen läßt. Setzt die Ladefläche mit ihrer Hinterkante auf dem Boden auf, ehe sie vollkommen ausgefahren ist, kann trotzdem das Ausfahren weiter voranschreiten, einmal, weil das hintere Ende der Ladefläche mit Rollen versehen ist und zum anderen, weil das hierbei auftretende geringfügige Absenken des vorderen Teiles des Rahmens und damit der Ladefläche durch die hydraulisch arbeitende Bremse nicht verhindert wird.

Die Erfindung zeigt den Vorteil, daß das Aus- und Einfahren sowie das Kippen der Ladefläche vollkommen selbständig erfolgt, indem lediglich ein Elektromotor bzw. die Seilwinde in Tätigkeit gesetzt wird, wobei das Aus- und Einfahren selbsttätig begrenzt werden kann, wenn in den Endstellungen der Ladefläche beispielsweise Endschalter vorgesehen sind. Das Beladen des Fahrzeuges erfolgt mit der ohnehin üblicherweise vorgesehenen Seilwinde, welche im ersten Ausführungsbeispiel eine Mehrfachfunktion ausübt, im zweiten Ausführungsbeispiel jedoch lediglich zum Beladen des Fahrzeuges dient.

Die Seilwinde braucht in beiden Ausführungsbeispielen dann nicht zum Beladen des Fahrzeuges in Tätigkeit gesetzt zu werden, wenn das zu transportierende Fahrzeug selbst fahrtüchtig ist, um beispielsweise nach einer Ausbesserung in eine Lackiererei transportiert zu werden.

Weitere Einzelheiten der Erfindung können der Zeichnung sowie deren Beschreibung und den Unteransprüchen entnommen werden.

Auf der Zeichnung sind Ausführungsbeispiele der Erfindung dargestellt, und zwar zeigen:

| | |
|---|---|
| Fig. 1 | das Fahrzeug in Seitenansicht; |
| Fig. 2 | das Fahrzeug der Fig. 1 in der ersten Betriebsstufe; |
| Fig. 3 | das Fahrzeug der Fig. 1 in der nachfolgenden Betriebsstufe; |
| Fig. 4 | das Fahrzeug der Fig. 1 in einer weiteren Betriebsstufe; |
| Fig. 5 | das Fahrzeug der Fig. 1 in beladenem Zustand; |
| Fig. 6 | ein geändertes Ausführungsbeispiel; |
| Fig. 7 | ein geändertes Ausführungsbeispiel; |
| Fig. 8 | das Fahrzeug der Fig. 7 mit halb ausgefahrener Ladefläche; |
| Fig. 9 | das Fahrzeug der Fig. 7 mit voll ausgefahrener Ladefläche; |
| Fig. 10 | das beladene Fahrzeug der Fig. 7; |
| Fig. 11 | eine Teildraufsicht auf die Fig. 8. |

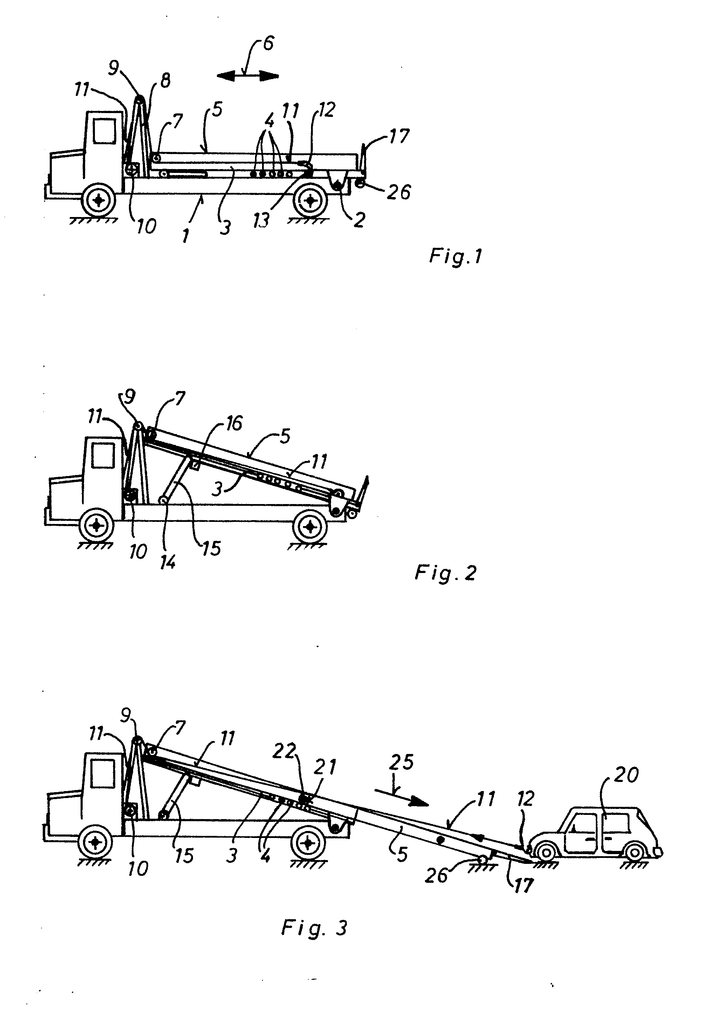

Gemäß Fig. 1 trägt das Fahrzeug 1 einen um Zapfen 2 schwenkbaren Rahmen 3. Im Rahmen 3 ist längs Kugellagerführungen 4 die Ladefläche 5 in Richtung des Pfeiles 6 verschiebbar. Am Rahmen 3 ist eine Rolle 7 befestigt und am Fahrzeug 1 mit Hilfe eines Dreifußes 8 eine Rolle 9.

- 4 -

Am Fahrzeug 1 ist ferner eine Seilwinde 10 vorgesehen. Von der Seilwinde 10 läuft ein Seil 11 über die Rollen 9 und 7. Am Ende des Seiles 11 ist ein Haken 12 angebracht, der in eine Ausnehmung 13 der Ladefläche eingehängt wird.

Soll der Rahmen 3 mit der Ladefläche 5 angehoben werden, wird die Seilwinde 10 in Tätigkeit gesetzt. Das Seil 11 wird hierdurch in seiner wirksamen Länge verkürzt, und es zieht die Rolle 7 nach oben bis in die Nähe der Rolle 9, so daß sich der Rahmen 3 mit der Ladefläche 5 anstellt, etwa mit einem Winkel von 20 Grad. Am Fahrzeug 1 ist ferner in Lagern 14 ein Bügel 15 schwenkbar angeordnet. Der Bügel 15 kann hochgestellt werden, so daß er sich hinter eine Anlage 16 des Rahmens legt und die Ladefläche nach dem Anheben arretiert. (Fig. 2).

Wird nunmehr von der Seilwinde Seil abgelassen, dann rollt die Ladefläche 5 aufgrund ihres Eigengewichtes in Richtung des Pfeiles 25 nach hinten, bis sie eine Endstellung erreicht hat, in der ihre Hinterkante fast den Boden berührt. In dieser Endstellung stützt sie sich hinten mit zwei Rädern 26 auf dem Boden ab. Die Ladefläche weist ferner eine rückwärtige Klappe 17 auf, die umgelegt werden kann, so daß die Ladeebene der Ladefläche 5 verlängert wird. Nunmehr wird das Seil 11 mit seinem Haken 12 aus der Ausnehmung 13 der Ladefläche ausgehängt und an dem aufzuladenen Fahrzeug 20 befestigt. Wird jetzt die Seilwinde 10 in Tätigkeit gesetzt, dann zieht diese das Seil 11 über die Rollen 9 und 7, die jetzt ihre Lage beibehalten und damit das Fahrzeug 20 auf die Ladefläche 5. Damit die Ladefläche 5 hierbei nicht in den Führungen 4 mitgezogen wird, weist der Rahmen 3 Löcher 21 auf, durch die eine Arretierstange 22 gesteckt wird. Ist das Fahrzeug 20 auf die Ladefläche gezogen, wird es mit Hilfe von Keilen 23 verblockt. Der Haken 12 des Seiles 11 wird vom Fahrzeug 20 gelöst und

-5-

wiederum in die Ausnehmung 13 eingehängt. Wird nunmehr die Seilwinde 10 in Tätigkeit gesetzt, zieht sie die Ladefläche 5 längs der Kugellagerführungen 4 wiederum auf den Rahmen 3, so daß die Position der Fig. 2 erhalten wird.

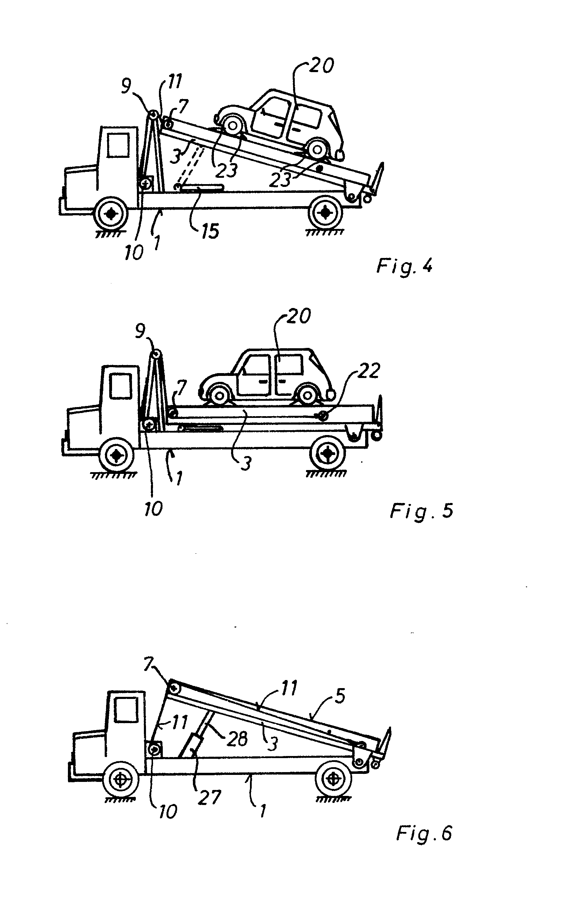

Der Arretierbügel 15 wird nunmehr eingeschwenkt, so daß die Ladefläche lediglich noch durch das Seil in ihrer Stellung gehalten wird. Durch Nachlassen des Seiles 11 wird die Ladefläche 5 abgesenkt. Vorteilhaft wird die Ladefläche 5 mit dem Rahmen 3 auch in dieser Stellung durch den Arretierstift 22 festgestellt. Das Abschleppfahrzeug 1 ist jetzt gemäß Fig. 5 zum Abtransport des Unfallfahrzeuges 20 bereit.

Gemäß Fig. 6 ist die Rolle 9 durch eine hydraulisch betätigte Anstellvorrichtung 27 ersetzt, deren Zylinder am Fahrzeug 1 befestigt ist und deren Kolbenstange 28 auf den Rahmen 3 oder die Ladefläche 5 wirkt.

Die Seilwinde 10 zieht das Seil jetzt unmittelbar über die Rolle 7. Das Ausfahren der Ladefläche 5 sowie das Beladen dieser Fläche geschieht in derselben Weise wie anhand der Fig. 1 bis 5 beschrieben.

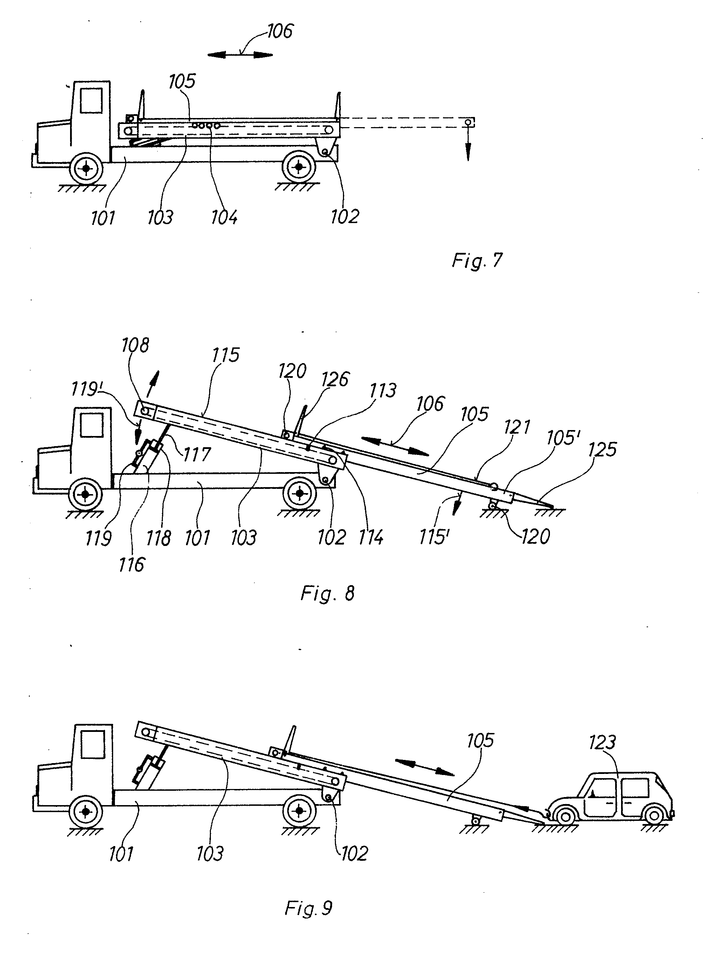

Gemäß Fig. 7 trägt das Fahrzeug 101 einen um Zapfen 102 schwenkbaren Rahmen 103. Im Rahmen 103 ist längs Kugellagerführungen 104 die Ladefläche 105 in Richtung des Pfeiles 106 verschiebbar.

Am Rahmen 103 ist ein Elektromotor 107 vorgesehen, der über ein Getriebe 108 und eine Magnetkupplung 109 ein Zahnrad 110 antreibt, über das eine endlose Kette 111 läuft. Am hinteren Ende des Rahmens läuft die Kette 111 um ein Zahnrad 112. An der Kette 111 ist mit Hilfe von Befestigungsmitteln 113 die Ladefläche 105 befestigt, so daß sie je nach Laufrichtung der Kette 111 entweder ausgefahren oder eingefahren wird.

Das Ausfahren der Kette wird durch einen Endschalter 114 beendet und das Einfahren der Kette durch einen Endschalter 115.

Ist die Ladefläche 105 weit genug nach hinten ausgefahren, nämlich so weit, daß sich ihr Schwerpunkt über die Zapfen 102 nach rechts hinaus bewegt hat, kippt der hintere Teil 105' der Ladefläche in Richtung des Pfeiles 115' nach unten. Damit hierbei die Ladefläche nicht zu hart auf dem Boden aufsetzt, ist eine Dämpfungseinrichtung 116 vorgesehen. Die Dämpfungseinrichtung 116 besteht aus einem Kolben 117, der in einem Zylinder 118 hin- und herbewegbar ist. Der Zylinder 118 ist beispielsweise mit Öl gefüllt. Der Raum vor dem Kolben 118 sowie der Raum hinter dem Kolben 118 ist über eine Leitung 119, in der eine Drossel angeordnet sein kann, miteinander verbunden. Bewegt sich der Kolben nach oben, wird die vor dem Kolben liegende Flüssigkeit über die Leitung 119 in den hinter dem Kolben liegenden Raum gedrückt, wodurch die Bremswirkung eintritt. Beim Abkippen des Rahmens in Richtung des Pfeiles 119 findet der umgekehrte Vorgang statt. Ist die Ladefläche 105 weit genug ausgefahren, setzt sie mit zwei Rädern 120 auf dem Boden auf. Hat die Ladefläche 105 hierbei noch nicht ihre endgültige Ausfahrstellung erreicht, rollt sie mit den Rädern auf dem Boden weiter nach hinten. Hierbei senkt sich ihr Vorderteil in Richtung des Pfeiles 119' geringfügig ab. Dieses Absinken behindert die Bremseinrichtung 116 nicht.

An der Ladefläche 105 ist eine Seilwinde 120 befestigt. Das Seil 121 trägt an seinem vorderen Ende einen Haken 122, der an dem abzuschleppenden Fahrzeug 123 befestigt wird. Wird die Seilwinde 120 in Tätigkeit gesetzt, zieht sie das Fahrzeug 123 auf die Ladefläche 105. Nunmehr wird die Ladefläche mit Hilfe des Motors 107 wieder eingefahren. Hierbei senkt sie sich wiederum selbsttätig ab, sobald der resultierende Schwerpunkt der Ladefläche und der des Rahmens über das Zapflager 102 nach links gewandert sind.

Am hinteren Ende trägt die Ladefläche 105 eine Klappe 125, die ausgeklappt eine Verlängerung der Ladefläche 105. darstellt und sozusagen eine Rampe für das auf die Ladefläche zu bewegende Fahrzeug.

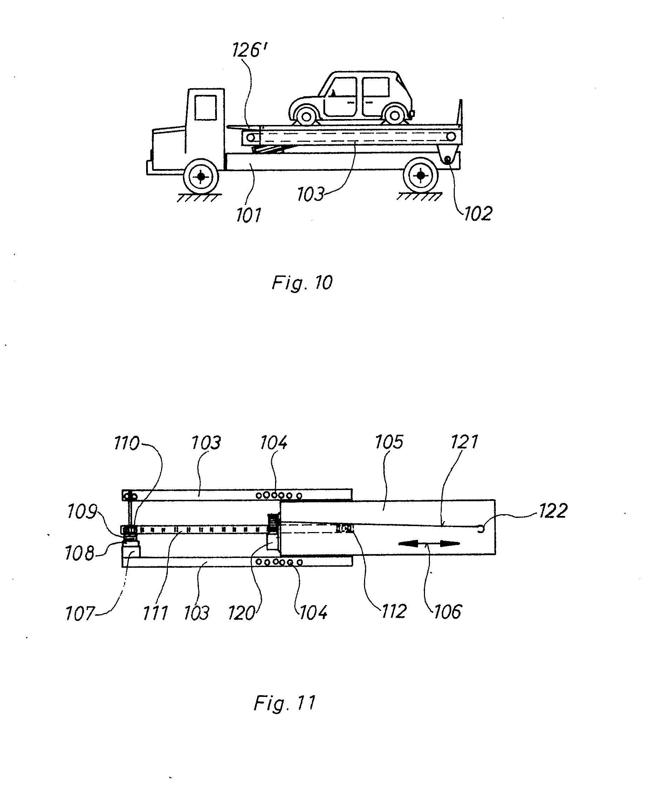

Am vorderen Ende trägt die Ladefläche 105 eine Klappe 126, welche in die Lage 126' geklappt (Fig. 10) eine Verlängerung der Ladefläche 105 nach vorn darstellt, so daß auch längere Gegenstände auf der Ladefläche 105 angeordnet werden können.

Das Wesen der Erfindung wird darin gesehen, daß das Aus- und Einfahren der Ladefläche praktisch vollkommen automatisch erfolgt, indem lediglich mit Hilfe eines Schalters zu Beginn des Ausfahrens und des Einfahrens jeweils der Motor oder die Seilwinde in Tätigkeit zu setzen ist, was gegen die zum Stand der Technik gehörenden Ausführungen die manuelle Bedienung vereinfacht. Lediglich zum Aufziehen des Fahrzeuges wird üblicherweise von Hand mit Hilfe einer Fernbedienung die Seilwinde 120 oder die Seilwinde 10 gesteuert bewegt, insbesondere, wenn das aufzuziehende Unfallfahrzeug dazu neigt, beim Aufziehen nach rechts oder links auszuwandern.

Kn/s
090981

**Patentanwalt**
**Dipl.-Math. S. Knefel**
633 Wetzlar
Wertherstraße 16 - Postfach 1924
Telefon (06441) 46330

0076923

— 8 —

Albert  M e i ß n e r ,  Talstraße 9,  6330 Wetzlar 22

Abschleppfahrzeug mit einer kippbaren
und ausfahrbaren Ladefläche

## Patentansprüche

1. Abschleppfahrzeug mit einer kippbaren und ausfahrbaren Ladefläche, gekennzeichnet durch eine am Fahrzeug ortsfest angeordnete Querachse, wenigstens ein ortsfestes Lager oder dergleichen, um die ein Rahmen schwenkbar ist, und daß der Rahmen eine Führung für die Ladefläche bildet, derart, daß die Ladefläche auf dem Rahmen verschiebbar ist.

2. Abschleppfahrzeug nach Anspruch 1, dadurch gekennzeichnet, daß die Ladefläche (5) oder der die Ladefläche tragende Rahmen (3) an ihrem vorderen Ende wenigstens eine Rolle (7) aufweist, über die ein Seil (11) geführt ist, dessen eines Ende über eine weitere, am Fahrzeug (1) befestigte Rolle (9) geführt und an einer Seilwinde (10) befestigt ist, und daß das andere Ende des Seiles einen Haken (12) trägt, der entweder in eine Ausnehmung (13) der Ladefläche einhängbar ist oder an einer auf die Ladefläche zu ziehenden Ladung (Unfallfahrzeug (20)).

3. Fahrzeug nach Anspruch 2, dadurch gekennzeichnet, daß

M P 524 EU

die an der Ladefläche (5) oder dem Rahmen (3) befestigte Rolle (7) in der Nähe der Ebene der Ladefläche angeordnet ist und die am Fahrzeug befestigte Rolle (9) oberhalb dieser Rolle (7).

4. Fahrzeug nach Anspruch 2, dadurch gekennzeichnet, daß die am Fahrzeug befestigte Rolle (9) an einem Bock, vorzugsweise einem Dreifuß (8), befestigt ist.

5. Fahrzeug nach Anspruch 1, gekennzeichnet durch einen unterhalb des Rahmens (3) am Fahrzeug befestigten Feststeller für den gekippten Rahmen (3).

6. Fahrzeug nach Anspruch 5, dadurch gekennzeichnet, daß der Feststeller als schwenkbarer Bügel (15) ausgebildet ist.

7. Fahrzeug nach Anspruch 1, gekennzeichnet durch eine durch den Rahmen (3) schiebbare Arretierstange (22) für die ein- bzw. ausgefahrene Ladefläche (5).

8. Fahrzeug nach Anspruch 1, dadurch gekennzeichnet, daß die Ladefläche an ihrem Ende zwei Räder (26) aufweist.

9. Fahrzeug nach Anspruch 1, dadurch gekennzeichnet, daß die Ladefläche (5) hinten eine Klappe (17) aufweist, welche im ausgeklappten Zustand eine Verlängerung der Ladefläche bildet.

10. Fahrzeug nach Anspruch 1, dadurch gekennzeichnet, daß die am Fahrzeug befestigte Rolle (9) durch eine gesondert am Fahrzeug befestigte Anstellvorrichtung (27) für die Ladefläche (4) ersetzt ist.

11. Fahrzeug nach Anspruch 10, dadurch gekennzeichnet, daß die Anstellvorrichtung aus einem hydraulisch betätigten Kolben

-10-

besteht.

12. Fahrzeug nach Anspruch 1, dadurch gekennzeichnet, daß die Ladefläche beim Ausfahren durch die damit verbundene Verlagerung ihres Schwerpunktes den Rahmen verschwenkt.

13. Fahrzeug nach Anspruch 12, gekennzeichnet durch eine von einem Motor (107) angetriebene endlose Kette (111), in die die ein- und ausfahrbare Ladefläche (105) greift.

14. Fahrzeug nach Anspruch 13, gekennzeichnet durch die Verwendung eines Elektromotors (107) sowie durch zwei das Ein- und Ausfahren der Ladefläche (105) begrenzende Endschalter (114, 115).

15. Fahrzeug nach Anspruch 13, gekennzeichnet durch eine elektromagnetische Kupplung (109) sowie durch ein Übersetzungsgetriebe (108) zwischen Motor (107) und Kettenrad (110).

16. Fahrzeug nach Anspruch 13, dadurch gekennzeichnet, daß zwischen Fahrzeug (101) und schwenkbarem Rahmen (103) eine Dämpfungseinrichtung (Stoßdämpfer (116)) vorgesehen ist.

17. Fahrzeug nach Anspruch 16, dadurch gekennzeichnet, daß der Stoßdämpfer (116) aus einem mit einem Medium, vorzugsweise Öl, gefüllten Zylinder (118) besteht, in dem ein Kolben (117) bewegbar ist und bei dem der Raum des Zylinders vor dem Kolben mit dem Raum des Zylinders hinter dem Kolben durch eine Leitung (119) verbunden ist.

18. Fahrzeug nach Anspruch 17, dadurch gekennzeichnet, daß in der Leitung (119) eine einstellbare Drossel vorgesehen ist.

19. Fahrzeug nach Anspruch 13, dadurch gekennzeichnet, daß die Ladefläche (105) an ihrem vorderen Ende eine schwenkbare Klappe (126) trägt, welche in wenigstens teilweise ausgefahrenem Zustand der Ladefläche (105) in die Verlängerung
der Ladefläche klappbar ist.

20. Fahrzeug nach Anspruch 13, dadurch gekennzeichnet,
daß die Ladefläche (105) oder der kippbare Rahmen (103)
am vorderen Ende eine vorzugsweise elektrisch angetriebene
Seilwinde (120) trägt.

310882
Kn/kr

Fig.1

Fig. 2

Fig. 3

Fig. 4

Fig. 5

Fig. 6

Fig. 7

Fig. 8

Fig. 9

126'

101  103  102

Fig. 10

110  103  104  105  121

109

108

107  111  103  120  104  112  106

122

Fig. 11

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,X | DE-U-8 123 605 (MEISSNER) <br> * Ansprüche 1-11; Figuren 1-6 * | 1-11 | B 60 P 3/12 |
| X | FR-A-2 271 068 (ETS WAMBERGUE) <br> * Figuren 5-10 * | 1-4,9 | |
| X | DE-A-1 505 527 (KRUPP) <br><br> * Seite 4, Zeile 11 bis Seite 6, Zeile 21; Figur 1* | 1,5,6, 10-12, 16-18 | |
| A | CH-A- 540 133 (STUDER) <br> * Unteranspruch 6; Figuren 1, 2 * | 14 | |
| A | US-A-3 606 249 (PEWTHERS) | 14 | RECHERCHIERTE SACHGEBIETE (Int. Cl. ³) <br><br> B 60 P 1/00 <br> B 60 P 3/00 |

Der vorliegende Recherchenbericht wurde für alle Patentansprüche erstellt.

| Recherchenort <br> BERLIN | Abschlußdatum der Recherche <br> 22-11-1982 | Prüfer <br> LUDWIG H J |
|---|---|---|